# EUROPEAN PATENT SPECIFICATION

(11) **EP 1 771 910 B1**
(45) Date of publication and mention of the grant of the patent: **23.09.2009**
(21) Application number: 05796540.2
(22) Date of filing: 29.07.2005
(51) Int. Cl.: H01M 8/16

(54) **ENZYMATIC FUEL CELL**
ENZYMATISCHE BRENNSTOFFZELLE
PILE A COMBUSTIBLE ENZYMATIQUE

(30) Priority: 03.08.2004 ZA 200406184
(43) Date of publication of application: 11.04.2007
(73) Proprietor: BHP Billiton SA Limited, Johannesburg (ZA)
(72) Inventor: DU PLESSIS, Chris, Andre, Johannesburg (ZA)
(74) Representative: Wise, Stephen James
(86) International application number: PCT/ZA2005/000116
(87) International publication number: WO 2006/015392

(56) References cited:
- EP-A- 0 827 229
- WO-A-02/086999
- US-A1- 2002 001 739
- US-A1- 2004 191 599
- WEYGAND M; WETZER B; DIETMAR PUM; SLEYTR U B; CUVILLIER N; KJAER K; HOWES P B; LOSCHE M: BIOPHYSICAL JOURNAL, vol. 76, no. 1, 1999, pages 458-468, XP009060251 cited in the application

## Description

### BACKGROUND OF THE INVENTION

This invention relates to an enzymatic fuel cell.

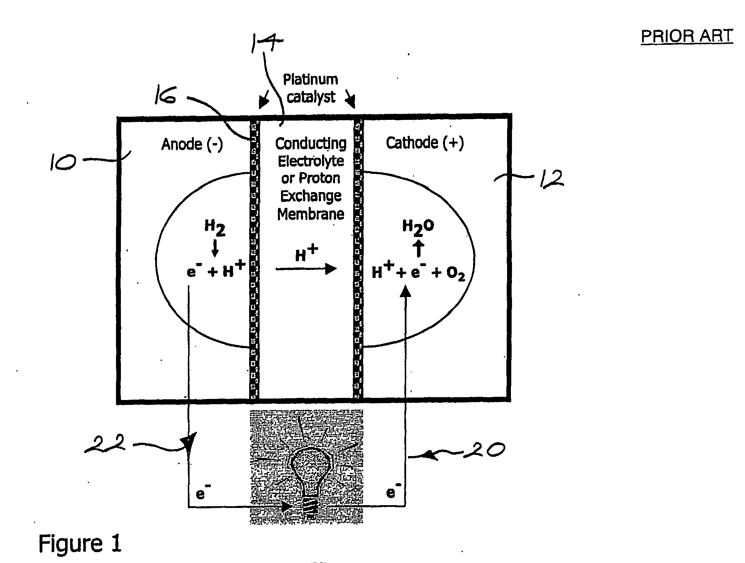

The mechanism of energy generation using fuel cells is well-known in the literature. In general a fuel cell includes an anode 10, an opposing cathode 12 and an electrolyte 14 at least between the anode and cathode (see Figure 1). A donor compound e.g. hydrogen gas, or an organic donor compound e.g. methanol, is passed through the anode compartment. As hydrogen or the other donor compound flows into the anode a catalyst such as a porous platinum or platinum alloy coating 16 on the anode helps to separate the gas into protons and electrons. The electrolyte, as a result of a diffusion gradient, allows protons to migrate from the anode to the cathode. The electrolyte is impermeable to electrons thus forcing the electrons to flow through an external circuit 20 - a process which generates an electric current 22.

Oxygen flows to the cathode where another catalyst facilitates a reaction in which the oxygen, protons and electrons combine to produce pure water and heat.

The typical reactions in a fuel cell are therefore:

anodic reaction: 2H₂ → 4H⁺ + 4e⁻

cathodic reaction: O₂ +4H⁺ + 4e⁻→ 2H₂O

overall net reaction: 2H₂ + O₂ → 2H₂O

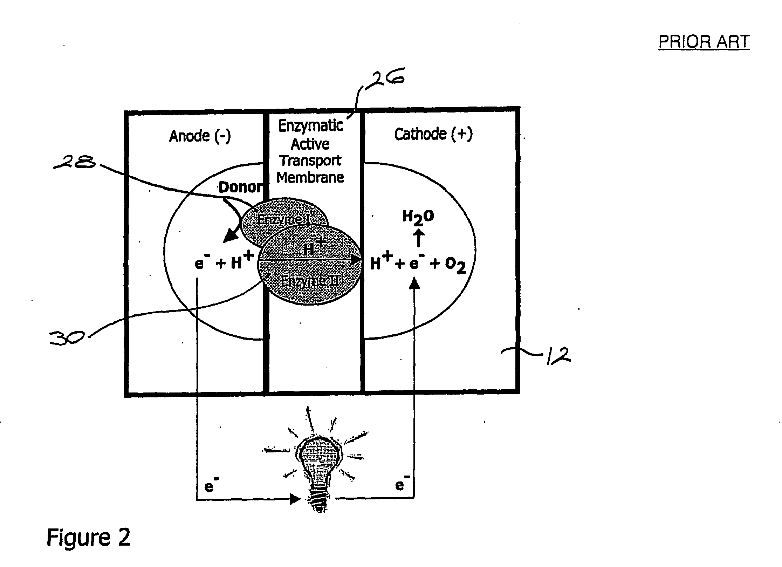

US patent specification No. 6500571 proposes an enzymatic fuel cell, of the type shown in Figure 2, wherein an enzymatic active transport membrane 26 is used instead of a conducting electrolyte or proton exchange membrane. The enzymatic active transport membrane may contain a number of different enzymes that perform a range of reactions. The enzymes may include dehydrogenase enzymes that catalyze the splicing of hydrogen protons and electrons from an organic donor, such as methanol (this is represented in Figure 2 by a component 28 marked "Enzyme 1") and proton pumping enzymes 30 (labelled "Enzyme 2" in Figure 2) which actively pump protons across the membrane to the cathode compartment 12. In a non-enzymatic fuel cell proton migration is induced by a diffusion gradient whereas in an enzymatic fuel cell the migration of protons from anode to cathode is independent of a proton gradient due to the active proton pumping action of the enzymes employed.

An enzymatic fuel cell, compared to a non-enzymatic fuel cell, can display increased current and power generating capacities. Greater fuel cell efficiencies are also achieved due to the fact that the cathode reaction can be operated at a lower pH than the anode reaction, a feature which facilitates a greater catalytic efficiency of the reactions in each compartment.

The enzymes used in an enzymatic fuel cell are embedded or immobilized into a polymer, lipid or other suitable substance in such a way that enzyme activity as well as proton flow through the enzymes are facilitated. This polymer or lipid must be impermeable to protons and electrons in order to force electron flow via an external current and to ensure that no diffusive flux of protons occurs between the anode and cathode other than by active proton pumping through the proton pumping enzymes.

Although an enzymatic fuel cell has a number of potential advantages it does suffer from some drawbacks and, typically, can only be operated continuously for a few hours. Also, an enzymatic fuel cell has a shelf life of a few months. These periods are significantly less than for non-enzymatic (e.g. platinum based) fuel cells. The lack of longevity and long-term functionality of the enzymes used in enzymatic fuel cells is the main reason for this drawback. In the context of microorganisms and a fuel cell application, the prior art (EP 0827229) goes no further than to teach the use of microorganisms, and in particular thermophilic microorganisms, in a biofuel cell as a catalyst to the electrochemical reactions taking place therein. This catalytic effect is due to the capability of the microorganisms to interact directly with a biofuel cell electrode by transferring electrons, generated by substrate oxidation within the cells, to the outside of the cells and onto the electrode.

### SUMMARY OF THE INVENTION

The invention is concerned with an enzymatic fuel cell which addresses the aforementioned problem.

The invention provides an enzymatic fuel cell which includes an enzymatic active transport membrane formed from ether-linked lipids, extracted from thermophilic archaea cells and functional thermophilic enzymes embedded in these specific lipids.

The ether-linked lipids are preferably tetraether lipids.

The ether-linked lipids may be used in conjunction with S-layer proteins which provide added support for the lipid layer and the active transport membrane containing the active enzymes.

### BRIEF DESCRIPTION OF THE DRAWINGS

The invention is further described by way of example with reference to the accompanying drawings in which:
Figures 1 and 2 refer to prior art constructions and have been described hereinbefore;
Figure 3 depicts an enzymatic active transport membrane according to one form of the invention; and
Figure 4 depicts an enzymatic active transport membrane according to another form of the invention.

### DESCRIPTION OF PREFERRED EMBODIMENTS

The invention is based on the realisation that the longevity of enzymatic fuel cells may be increased by using enzymes and lipids, typically ether-linked lipids, derived from thermophilic bacteria or archaea. These microbial cells tolerate, and thrive in, harsh environmental conditions and exhibit more robust, durable and prolonged lipid stability and enzymatic activity than similar lipids and enzymes derived from microbes grown at mesophilic temperatures i.e. in the range of from 15°C to 40°C. The use of thermophilic enzymes embedded in a suitable membrane therefore has the potential of prolonging the fuel cell activity of an enzymatic fuel cell.

A problem with the use of enzymes derived from thermophilic bacteria or archaea is that these enzymes may not be sufficiently or optimally compatible with membrane forming polymers, which are usually synthetic, or membrane forming ester lipids that are typically extracted from bacteria and used in lipid bilayers in which these enzymes are embedded, to form an active transport membrane. This incompatibility may result from the fact that the three-dimensional molecular configuration and orientation of the polymer molecules or ester lipids in lipid bilayers do not fully conform to the three-dimensional folding pattern and configuration of amino acids contained in the target themophile enzymes. Such incompatibility may manifest itself as:
(a) a reduced enzyme packing density (the number of active enzymes per surface area of the active transport membrane);
(b) a sub-optimal activity of the thermophilic enzymes; or
(c) a leakage of protons or electrons through the membrane.

Thermophilic microorganisms, of which most are archaea, have been adapted to tolerate, and grow under, conditions of high temperature. Such conditions often include highly acid conditions in which high metal concentrations also prevail in the solution surrounding the cell. The internal cell pH of these cells, even when grown under low pH (typically <2) conditions, is maintained at a neutral pH and essentially free from metal contamination, even in the presence of very high (several grams per litre) dissolved metal concentrations in the surrounding solution. These cell membranes have constituents that prevent hydrogen protons (H⁺) from entering the cell, but also allow for the maintenance of membrane-embedded enzyme activity for prolonged periods of time. This cell membrane or cell envelope has a number of components that include ether-linked lipids (most typically tetraether lipids in the case of archaea), S-layer proteins and embedded functional enzymes that include dehydrogenase and proton-pumping enzymes.

Ether-linked phospholipids (such as tetraether lipids) are a special group of lipids found only in thermophilic archaea cells. The ether-linked lipids in archaea cells are molecules in which a hydrophobic hydrocarbon chain (usually containing chains from 10 to 22 carbons long) is linked to a glycerol backbone by ether linkages. The glycerol is further linked to an organophosphate group, and these lipids are termed phospholipid ether lipids. The functional groups attached to the glycerol units at both ends of the ether lipids, infer a polarity (and hydrophilic property) to these "heads" of the molecule, while the hydrocarbon organic chains are non-polar (and thus hydrophobic). These compounds are membrane-spanning lipids that form part of the cell envelope and provide unique protection to the archaea cells due to their thermostable properties, low permeability to high proton and metal concentrations in the prevailing environment, and resistance to electrical current conductance.

S-layer proteins form the outermost cell envelope of a large number of bacteria and archaea cells. S-layers are composed of a single protein or glycoprotein species (Mw 40-200 kDa) and exhibit unique lattice symmetry with unit cell dimensions in the range of 3 to 30 nm. S-layers are generally 5 to 10 nm thick and have pores of identical size (diameter, 2-8 nm) and morphology.

Both the ether-linked lipids and the S-layer proteins have so-called self-assembly properties. In general, this refers to their ability to spontaneously rearrange into their most stable three-dimensional arrangements. This self-assembly property allows for extracted ether-linked lipids and S-layer proteins to be reconstituted into functional lipid mono-layer (in the case of the lipids) and symmetrical lattice structures (in the case of S-layer proteins) in order to achieve a number of biomimetic applications. This self-assembly property also allows for the incorporation and embedding of functional enzymes, as is known in the art (Weygand et al. 1999. Bacterial S-layer protein coupling to lipids: X-ray reflection and grazing incidence diffraction studies, Biophysical Journal vol 76, pp 458-468.).

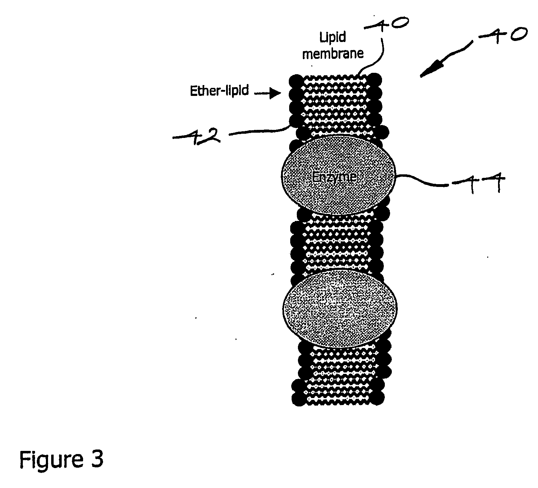

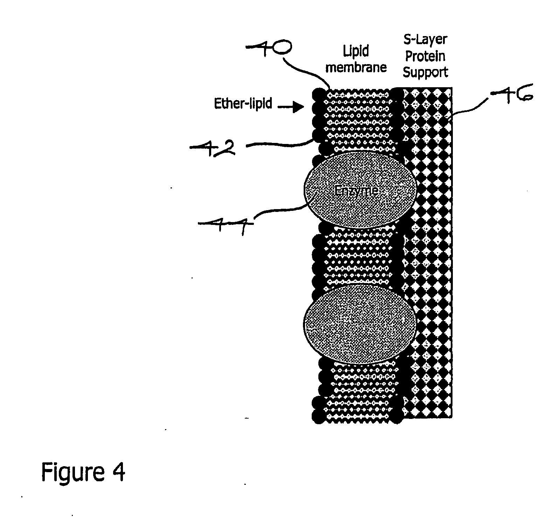

Ether lipids can either be used alone in order to form a membrane with embedded enzymes (Figure 3), or may be used in conjunction with S-layer proteins in order to provide added support (Figure 4). S-layer support can be provided either on one or both sides of the lipid membrane.

Figure 3 illustrates a membrane 40 formed from ether-linked phospholipids 42 in which are embedded and immobilised functional thermophilic enzymes 44. Figure 4 illustrates a membrane structure which is substantially similar except that the lipid membrane is supported by S-layer proteins 46.

The self-assembly properties of bipolar etherlipids facilitate lipid monolayer membrane formation. This is critical to the functioning of embedded fuel cell enzymes as it is important for the membrane layer to be sufficiently thin to allow for the enzymes to span the membrane and protrude sufficiently from both sides of the membrane in order to allow for proton flux through the enzymes. The self-assembly properties of etherlipids facilitate the embedding process of the enzymes. Lipid monolayers formed by these etherlipids are more stable than lipid bilayers with other lipid constituents such as ester lipids.

Etherlipid membrane layers interact with embedded enzymes in naturally occurring cells in such a way that the enzymatic activity life expectancy is significantly prolonged. It is anticipated that a similar benefit will arise with the use of etherlipids in fuel cell active transport membranes.

The S-layer protein lattices allow for structural support, increased enzyme packing density and general increased efficiency.

The etherlipids can be used in conjunction with other lipids or even with synthetic polymers.

## Claims

1. An enzymatic fuel cell which includes an enzymatic active transport membrane formed from ether-linked lipids, extracted from thermophilic archaea cells and functional thermophilic enzymes embedded in these specific lipids.

2. A fuel cell according to claim 1 in which the ether-linked lipids are tetraether lipids.

3. A fuel cell according to claim 1 or claim 2 wherein the ether-linked lipids are used in conjunction with S-layer proteins which provide added support for the lipid layer and the active transport membrane containing the active enzymes.

4. A fuel cell according to claim 3 wherein the S-layer proteins provide support on both sides of the lipid membrane.

## Patentansprüche

1. Eine enzymatische Brennstoffzelle, die eine enzymatische aktive Transportmembran umfasst, welche aus etherverknüpften Lipiden, die aus thermophilen Archaeenzellen extrahiert sind, und in diesen spezifischen Lipiden eingebetteten funktionellen thermophilen Enzymen gebildet ist.

2. Brennstoffzelle gemäß Anspruch 1, bei der die etherverknüpften Lipide Tetraetherlipide sind.

3. Brennstoffzelle gemäß Anspruch 1 oder Anspruch 2, wobei die etherverknüpften Lipide in Verbindung mit S-Schicht-Proteinen, die eine zusätzliche Stütze für die Lipidschicht und die die aktiven Enzyme enthaltende aktive Transportmembran bereitstellen, verwendet werden.

4. Brennstoffzelle gemäß Anspruch 3, wobei die S-Schicht-Proteine auf beiden Seiten der Lipidmembran eine Stütze bereitstellen.

## Revendications

1. Une pile à combustible enzymatique qui inclut une membrane de transport actif enzymatique formée à partir de lipides à liaisons éther, extraits de cellules d'archées thermophiles et d'enzymes thermophiles fonctionnelles enchâssées dans ces lipides spécifiques.

2. Une pile à combustible selon la revendication 1 dans laquelle les lipides à liaisons éther sont des lipides tétraéther.

3. Une pile à combustible selon la revendication 1 ou la revendication 2 où les lipides à liaisons éther sont utilisés en conjonction avec des protéines de couche S qui fournissent un support additionnel pour la couche lipidique et la membrane de transport actif contenant les enzymes actives.

4. Une pile à combustible selon la revendication 3 où les protéines de couche S fournissent un support sur les deux côtés de la membrane lipidique.
